**Europäisches Patentamt**

**European Patent Office**

**Office européen des brevets**

(11) Veröffentlichungsnummer : **0 365 786 B1**

(12) **EUROPÄISCHE PATENTSCHRIFT**

(45) Veröffentlichungstag der Patentschrift :
**06.11.91 Patentblatt 91/45**

(51) Int. Cl.$^5$ : **H04N 17/00**

(21) Anmeldenummer : **89115778.6**

(22) Anmeldetag : **26.08.89**

(54) **Verfahren zur Bestimmung der Übertragungsfunktion einer Videokamera.**

(30) Priorität : **25.10.88 DE 3836280**

(43) Veröffentlichungstag der Anmeldung :
**02.05.90 Patentblatt 90/18**

(45) Bekanntmachung des Hinweises auf die
Patenterteilung :
**06.11.91 Patentblatt 91/45**

(84) Benannte Vertragsstaaten :
**AT BE CH DE ES FR GB GR IT LI LU NL SE**

(56) Entgegenhaltungen :
**FERNSEH- UND KINO-TECHNIK, Band 42, Nr.
5, Mai 1988, Seiten 201-208, Heidelberg, DE; W.
FISCHER: "Die Fast-Fourier-Transformation
für die Videomesstechnik wiederentdeckt"**

(73) Patentinhaber : **Rohde & Schwarz GmbH & Co.
KG
Mühldorfstrasse 15
W-8000 München 80 (DE)**

(72) Erfinder : **Fischer, Walter, Dipl.-Ing. FH
Am Mühlbachbogen 43b
W-8052 Moosburg (DE)**

(74) Vertreter : **Graf, Walter, Dipl.-Ing.
Sckellstrasse 1
W-8000 München 80 (DE)**

## Beschreibung

Die Erfindung betrifft ein Verfahren und eine Anordnung zur Bestimmung der Übertragungsfunktion, beispielsweise des Luminanz-Auflösungsvermögens, einer Videokamera durch Aufnahme einer Strichmustervorlage.

Zur Bestimmung des Auflösungsvermögens einer Videokamera ist es bekannt, mit der Kamera verschieden feine Strichmustervorlagen aufzunehmen und das hierdurch erzeugte Videosignal optisch auszuwerten. Dieses bekannte Verfahren erlaubt nur die Ermittlung des Amplitudenganges in groben Schritten und nicht die Bestimmung des Phasenganges.

Zum Messen von Frequenzgang, Sprungverhalten, Phasenverlauf oder Gruppenlaufzeit von Videoverstärkern in Fernsehkameras ist es bekannt, Prüfsignale zu erzeugen und diese so auf den Videoverstärker zu geben, daß am Verstärkereingang weitgehend die gleichen Verhältnisse vorliegen wie wenn diese Signale von der Bildaufnahmeröhre kämen (DE-A-3624585). Des weiteren ist es bekannt, zur Messung des Frequenz- und des Impulsverhaltens eines Vierpols der Videotechnik diesem Vierpol im halbbildweisen Wechsel gewobbelte Sinusschwingungen und rechteckförmige Impulse zuzuführen (DE-A-2431919). Schließlich ist es auch schon bekannt, zur Erzielung der Rasterdeckung bei Farbfernseh-Kameras mit mehreren Festkörperbildsensoren mittels der Farbefernseh-Kamera ein Testbild aufzunehmen (US-A-4761685).

Es ist daher Aufgabe der Erfindung, ein Verfahren zur Bestimmung der Übertragungsfunktion einer Videokamera aufzuzeigen, das nicht nur sehr einfach und genau die Ermittlung des Amplitudenganges, sondern auch die Ermittlung des Phasenganges bzw. des Gruppenlaufzeitverlaufes ermöglicht.

Diese Aufgabe wird ausgehend von einem Verfahren laut Oberbegriff des Hauptanspruches durch dessen kennzeichnende Merkmale gelöst. Vorteilhafte Weiterbildungen ergeben sich aus den Unteransprüchen.

Das erfindungsgemäße Verfahren geht aus von der Erkenntnis, daß eine Videokamera bei Aufnahme eines ausreichend schmalen Striches bei idealer Umwandlung, d.h. bei idealem Übertragungsverhalten am Ausgang im Videosignal ebenfalls einen sehr schmalen elektrischen Rechteckimpuls erzeugt. Wenn also die Kamera einen ausreichend schmalen Strich aufnimmt und die Breite dieses Striches so klein ist, daß ihr Einfluß auf den Amplituden- und Phasen-Frequenzgang des bei der zeitsequenziellen Abtastung des Striches in der Kamera entstehenden elektrischen Impulses sehr klein ist, nämlich kleiner als die gewünschte Meßgenauigkeit, so entspricht die Anregung des Kamerasystems näherungsweise der Anregung mit einem Dirac-Impuls, d.h. das Spektrum des optischen Anregungsimpulses weist im betrachteten Frequenzband (Übertragungsband des Kamerasystems) einen linearen Amplitudenfrequenzgang und einen linearen Phasengang auf und somit auch eine konstante Gruppenlaufzeit. Wird beispielsweise eine Meßgenauigkeit von 1% gefordert, also ein Meßfehler von 1% bei der Amplitudengang-, Phasengangbzw. Gruppenlaufzeit-Messung, so muß der Einfluß der Strichbreite auf diese Meßgrößen beispielsweise kleiner als 0,1% sein. Unter diesen Bedingungen erfolgt also die Anregung des Systems wie gewünscht annähernd mit einem Dirac-Impuls, der selbst keinen Amplituden- bzw. Phasenfehler und damit auch keinen Gruppenlaufzeitfehler besitzt, sondern der nur durch die Übertragungseigenschaften der Videokamera beeinflußt ist. Durch entsprechende Analyse der Impulsantwort des durch Objektiv, optische Vorfilterung, Abtaststrahlapertur, elektrische Nachverstärkung, Entzerrung, Gamma-Korrektur usw. bandbegrenzten Kamerasystems können damit unmittelbar Rückschlüsse auf das Übertragungsverhalten der Videokamera gezogen werden. Die gewünschte minimale Strichbreite zur Erzeugung der genügend schmalen Impulse, deren optische Anregung annähernd als Dirac-Impuls wirkt, kann im Prinzip bei Kenntnis der Auflösung des Kamerasystems berechnet werden, denn bei einer Kamera mit idealem Übertragungsverhalten ist die Dauer des durch den Strich erzeugten schmalen Rechteckimpulses im Videosignal wesentlich kleiner als der Kehrwert der Bandbreite des Kamerasystems. Auch mit dieser Bemessungsvorschrift kann die Breite des Striches bestimmt werden, die nötig ist, damit das Kamerasystem näherungsweise mit einem Dirac-Impuls angeregt wird, welcher als optischer Impuls selbst keine Fehler im Amplituden- und Phasengang erzeugt, sondern als idealer Meßimpuls wirkt, und an dem durch ihn in der Kamera erzeugten elektrischen Impuls nur die Übertragungseigenschaften der Videokamera selbst erkennbar sind und durch die anschließende Fourier-Transformation bestimmt werden können. Die diskrete Fourier-Transformation (FFT) ist in der Videomeßtechnik zwischenzeitlich gebräuchlich. Ein hierfür geeignetes rechnergesteuertes Meßsystem ist beispielsweise beschrieben in "Neues von Rohde & Schwarz" 121, Frühjahr 1988, S. 34 bis 36 und "Fernseh- und Kino-Technik" 42, Jahrgang Nr. 5/1988, S. 201 bis 206. Mit der hier beschriebenen Fast-Fourier-Transformation (FFT), die ein schneller Sonderfall der diskreten Fourier-Transformation ist, kann ein in einem Videosignal enthaltener Signalausschnitt, bei dem erfindungsgemäßen Verfahren also der durch den schmalen Strich der Vorlage erzeugte Impuls, aus dem Gesamtsignal selektiert und mit Hilfe der FFT aus dem Zeitbereich in den Frequenzbereich transformiert werden. Bei der FFT erhält man zunächst die komplexe Übertragungsfunktion in kartesischer Form. Durch Umwandlung in die Polarform (Eulersche Form) kann daraus dann der Amplitudenfrequenzgang und der Phasengang der Videokamera ermittelt und ausgewertet werden. Durch Differenzieren des Phasenganges kann der Gruppenlaufzeitverlauf ermittelt werden.

Für das erfindungsgemäße Verfahren ist es also nur nötig, als Mustervorlage für die Videokamera ein Strichmuster zu verwenden, das am Ausgang der Kamera einen genügend schmalen Impuls erzeugt, dessen optische Anregung angenähert als Dirac-Impuls wirkt. Dies kann in der Praxis beispielsweise dadurch geschehen, daß eine Mustervorlage mit verschieden breiten vertikalen Strichen benutzt wird, wobei nur darauf zu achten ist, daß der gegenseitige Abstand dieser Striche genügend groß ist, so daß die damit in einer Zeile des Videosignals nacheinander erzeugten Impulse sich mit ihren Ein- und Ausschwingvorgängen nicht stören und überlappen. Ein breiter Strich wird einen breiten elektrischen Impuls erzeugen, der einen stark abfallenden Frequenzgang aufweist und daher für das erfindungsgemäße Meßverfahren nicht unmittelbar geeignet ist. Beim erfindungsgemäßen Verfahren werden daher nacheinander Impulse von immer schmaleren Strichen, d.h. immer schmalere Impulse betrachtet. Dies kann beispielsweise mit einem am Ausgang der Meßanordnung angeschalteten Oszillographen geschehen. Wenn festgestellt wird, daß der Impuls mit immer noch schmaleren Strichen in seiner Amplitude immer kleiner wird, steht fest, daß der anregende optische Impuls als Dirac-Impuls betrachtet werden kann (in der Praxis wird dies dann der Fall sein, wenn der zunächst bei breiteren Strichen entstehende Ausgangsimpuls auf eine Amplitude von etwa 50 bis 70% des Ausgangsimpulses abgesunken ist). Wenn auf diese Weise ein Strich von der Mustervorlage ausgewählt ist, der genügend schmal ist, um einen entsprechend schmalen elektrischen Impuls zu erzeugen, kann das erfindungsgemäße Analyseverfahren durchgeführt werden. Eine andere Möglichkeit der Auswahl des zweckmäßigen optischen Impulses ist die Verwendung einer Mustervorlage mit einem vertikalen Strich, der in vertikaler Richtung unterschiedliche Breite besitzt, also die Form eines beispielsweise von oben nach unten spitz zulaufenden Keiles, wobei wiederum entweder ein weißer Keil auf schwarzem Grund oder ein schwarzer Keil auf weißem Grund verwendet werden kann. In den verschiedenen horizontalen Zeilen des Videosignals, die diesen Keil abtasten, entstehen damit immer schmalere Impulse im Videosignal, aus dem damit dann wiederum der Impuls ausgewählt werden kann, der die Dirac-Impuls-Eigenschaften besitzt. Eine weitere Möglichkeit zur Auswahl des genügend schmalen Dirac-Impulses besteht darin, den Abstand zwischen Kamera und der Strichmustervorlage so lange zu vergrößern, bis die Kamera einen genügend schmalen Strich aufnimmt.

Im Prinzip ist für das erfindungsgemäße Verfahren nur ein einziger weißer oder schwarzer Strich auf einer schwarzen oder weißen Unterlage erforderlich, wenn die Breite des Striches von Anfang an jedoch noch nicht festliegt und durch eines der obigen Verfahren erst bestimmt werden muß, ist es vorteilhaft, entsprechende Mustervorlagen mit mehreren vertikalen Strichen zu verwenden und über eine entsprechende Zeilenselektion im Videosignal und entsprechende Ortsselektion in dieser Zeile beispielsweise mittels eines Rechners die erzeugten mehrfachen verschieden breiten Impulse im Videosignal auszuwerten. Auch ein schräg über die Mustervorlage verlaufender Strich kann für das erfindungsgemäße Meßverfahren von Vorteil sein, da hiermit Fehler von optischen Vorfiltern einer Videokamera festgestellt werden können.

Bei einer vergleichenden Auswertung der mit einem schwarzen Strich auf weißer Vorlage und der mit einem weißen Strich auf schwarzer Vorlage erzeugten Impulse können Rückschlüsse auf nichtlineare Einflüsse des Kamerasystems gezogen werden. Solche gegebenenfalls störende Einflüsse können gemäß einer Weiterbildung der Erfindung auch dadurch ausgeschaltet werden, daß von solchen mehrfach nacheinander erzeugten Impulsen von schwarzen bzw. weißen Strichen nach Inversion der einen Impulse der Mittelwert gebildet wird, was auf einfache Weise im Rechner nach der FFT-Analyse möglich ist. Durch entsprechende Mittelung einer Vielzahl von nacheinander erzeugten Impulsen im Zeitbereich oder Frequenzbereich können gemäß einer Weiterbildung der Erfindung außerdem Rauscheinflüsse eliminiert werden.

Das erfindungsgemäße Verfahren ist nicht nur zur Ermittlung des Luminanz-Auflösungsvermögens und des Auflösungsvermögens der einzelnen Farbkanäle einer Videokamera mit einem entsprechenden Schwarz-Weiß-Testbild geeignet, sondern könnte bei entsprechend farbiger Strichmustervorlage auch zur Bestimmung des Übertragungsverhaltens und des Übersprechens der einzelnen Farbkanäle einer Farbbild-Videokamera angewendet werden. Durch Aufnahme und Analyse einer Grautreppe oder eines Graukeiles an einer anderen Stelle im Bild kann eine Graduationsentzerrung des Meß impulses vorgenommen werden (Kompensation von nichtlinearen Verzerrungen des Kamerasystems).

Die Erfindung wird im folgenden anhand schematischer Zeichnungen an Ausführungsbeispielen näher erläutert.

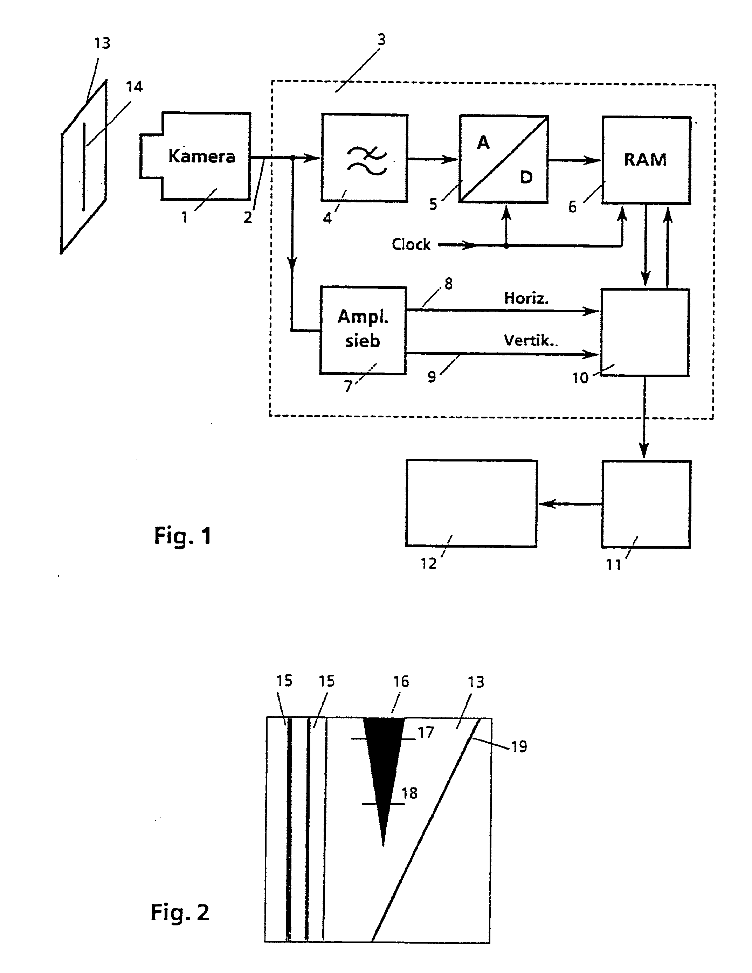

Fig. 1 zeigt das Prinzipschaltbild einer Meßanordnung zur Ausführung des erfindungsgemäßen Verfahrens. Die zu testende Kamera 1 ist mit ihrem Videosignal-Ausgang 2 mit einem Digitalanalysator 3 verbunden, wie er beispielsweise in den obengenannten Literaturstellen beschrieben ist. In diesem Analysator 3 wird das Videosignal verstärkt, geklemmt und zur Einhaltung des Abtast-Theorems in einem Tiefpaßfilter gefiltert. Anschließend erfolgt die Digitalisierung einer im Videosignal frei wählbaren Videozeile mittels eines Analog-Digital-Wandlers 5, die digitalen Abtastwerte werden in einem Speicher 6 abgelegt. Die Auswahl der gewünschten Videozeile erfolgt durch Auswertung der Horizontalimpulse 8 und Vertikalimpulse 9 aus dem Amplitudensieb 7 durch den Mikroprozessor 10. Der Mikroprozessor 10 steuert hierbei den gesamten Digitalisierungs- und Abspeicherungsvorgang. Nach Abschluß dieses Vorganges werden die Abtastwerte einer Videozeile zum Auswerterechner 11 übertragen. Dort wird der zu untersuchende Ausschnitt mit dem Meßimpuls aus der Videozeile selektiert und analysiert. Das Ergebnis kann auf einem Bildschirm 12 angezeigt oder über einen Drucker ausgedruckt werden. Der Bildschirm 12 dient ebenfalls zur Kontrolle der ausgewählten Meßzeile und hilft bei der Auswahl eines genügend kurzen Impulses durch die Darstellung des Zeitverlaufes des Impulses (Amplitudenauswertung).

Vor der Kamera 1 wird eine Mustervorlage 13 angeordnet, die beispielsweise nur einen einzigen schmalen vertikalen schwarzen Strich 14 auf einem weißen Hintergrund aufweist. Weitere mögliche Strichformen für die Mustervorlage 13 zeigt Fig. 2. So kann die Gesamtvorlage 13 beispielsweise mit einer Mehrzahl von vertikalen Strichen 15 versehen sein, die beispielsweise unterschiedliche Strichbreite besitzen und deren Abstand genügend groß ist, damit die erzeugten Impulse sich mit ihrem Ein- und Ausschwingverhalten nicht stören. Aus einem solchen Muster mit verschieden breiten Strichen 15 kann nach obigem Verfahren dann der geeignete genügend schmale optische Impuls ausgewählt werden. Der vertikale Strich kann auch in Form eines Keiles 16 auf der Vorlage 13 angebracht sein, in der Abtastzeile 17 wird dann von der Kamera ein breiter Impuls erzeugt, der mit weiter nach unten folgenden Zeilen immer schmaler wird, bis etwa nahe der Spitze eine Zeile 18 gefunden wird, die einen Dirac-Impuls erzeugende Breite besitzt. Bei einfachen Videokameras ist meist zwischen dem Objektiv und dem optischen Wandler noch ein sogenanntes Vorfilter angebracht, das aus einem Gitterstrichraster besteht. An den Kreuzungsstellen dieses Strichrasters entstehen auch bei Aufnahme eines genügend schmalen Striches der Vorlage immer breitere elektrische Ausgangsimpulse, was bei der Aufnahme eines schrägen Striches 19 festgestellt werden kann, d.h. bei Aufnahme eines solchen schrägen Striches können bei einer Kamera mit Vorfilter entsprechende Fehler eines solchen optischen Vorfilters festgestellt werden. Die Striche 14, 15, 16, 19 können entweder schwarz auf weißem Grund oder weiß auf schwarzem Grund sein, gegebenenfalls auch farbig auf einem entsprechend farbigen Kontrasthintergrund.

## Patentansprüche

1. Verfahren zur Bestimmung der Übertragungsfunktion einer Videokamera durch Aufnahme eines Strichmusters, dadurch **gekennzeichnet,** daß die Breite der Striche des Strichmusters so klein gewählt ist, daß ihr Einfluß auf den Amplituden- und Phasen-Frequenzgang des bei der Abtastung eines Striches in der Kamera entstehenden elektrischen Impulses vernachlässigbar ist,
und daß die so am Ausgang der Videokamera erzeugten schmalen elektrischen Impulse selektiert und einer diskreten Fourier-Transformation unterworfen werden.

2. Verfahren nach Anspruch 1, dadurch **gekennzeichnet,** daß von dem Strichmuster Striche mit zunehmend kleinerer Breite mit der Kamera aufgenommen werden und die für die Fourier-Transformation gewünschte minimale Strichbreite durch Auswertung der Amplitude der am Ausgang der Videokamera erzeugten elektrischen Impulse ausgewählt wird.

3. Verfahren nach Anspruch 1 oder 2, dadurch **gekennzeichnet,** daß der Abstand der Striche auf der Mustervorlage so groß gewählt ist, daß die Ein- und Ausschwing-Vorgänge der damit erzeugten Impulse sich gegenseitig nicht beeinflussen.

4. Verfahren nach Anspruch 1 bis 3, dadurch **gekennzeichnet,** daß aus der bei der diskreten Fourier-Transformation, insbesondere Fast-Fourier-Transformation, gewonnenen komplexen Übertragungsfunktion nach Umwandlung in Betrag und Phase mittels eines Rechners der Amplitudenfrequenzgang und/oder der Phasenfrequenzgang der Videokamera ermittelt wird.

5. Verfahren nach Anspruch 4, dadurch **gekennzeichnet,** daß durch Differenzieren des Phasenfrequenzganges der Gruppenlaufzeitverlauf im Rechner errechnet wird.

6. Verfahren nach einem der vorhergehenden Ansprüche, dadurch **gekennzeichnet,** daß die Mustervorlage aus mindestens einem vertikalen schwarzen Strich auf weißem Hintergrund und/oder mindestens einem vertikalen weißen Strich auf schwarzem Hintergrund besteht.

7. Verfahren nach einem der vorhergehenden Ansprüche, dadurch **gekennzeichnet,** daß die Mustervorlage mindestens einen Strich von in vertikaler Richtung keilförmig zunehmender Breite aufweist.

8. Verfahren nach einem der vorhergehenden Ansprüche, dadurch **gekennzeichnet,** daß die Mustervorlage mindestens einen schrägen Strich aufweist.

9. Verfahren nach einem der vorhergehenden Ansprüche, dadurch **gekennzeichnet,** daß aus nacheinander erzeugten Impulsen von schwarzen Strichen und Impulsen von weißen Strichen nach der diskreten Fourier-Analyse der Mittelwert gebildet wird.

10. Verfahren nach einem der vorhergehenden Ansprüche, dadurch **gekennzeichnet**, daß aus mehreren nacheinander erzeugten Impulsen vor oder nach der diskreten Fourier-Transformation der Mittelwert gebildet wird.

## Claims

1. Method for determining the transfer function of a video camera by recording a line pattern, characterised by making the width of the lines of the line pattern small enough for their influence on the amplitude frequency response and phase frequency response of the electric pulse produced in the camera when a line is scanned to be negligible, and by selecting the narrow electric pulses thus generated at the video camera's output and subjecting same to discrete Fourier transformation.

2. Method according to claim 1, characterised in that from the line pattern, lines with ever smaller widths are recorded by the camera and the minimum line width desired for the Fourier transformation is chosen by evaluating the amplitude of the electric pulses generated at the video camera's output.

3. Method according to claim 1 or 2, characterised by making the spacing between the lines on the pattern template large enough for the transient and decay responses of the pulses thereby generated not to affect one another.

4. Method according to claims 1 to 3, characterised by determining the video camera's amplitude frequency response and/or phase frequency response from the complex transfer function obtained in the discrete Fourier transformation, more particularly the fast Fourier transformation, after size and phase conversion using a computer.

5. Method according to claim 4, characterised by calculating the group delay time on the computer by differentiating the phase frequency response.

6. Method according to one of the preceding claims, characterised in that the pattern template consists of at least one vertical black line on a white background and/or at least one vertical white line on a black background.

7. Method according to one of the preceding claims, characterised in that the pattern template has at least one line of vertically cuneiformly increasing width.

8. Method according to one of the preceding claims, characterised in that the pattern template has at least one diagonal line.

9. Method according to one of the preceding claims, characterised by constituting the mean from successively generated pulses of black lines and pulses of white lines after discrete Fourier analysis.

10. Method according to one of the preceding claims, characterised by constituting the mean from a plurality of successively generated pulses before or after discrete Fourier transformation.

## Revendications

1. Procédé pour déterminer la fonction de transfert d'une caméra vidéo par la prise de vue d'un modèle à traits, caractérisé en ce qu'on choisit une largeur des traits du modèle suffisamment faible pour que son influence sur le passage des amplitudes et des phases-fréquences de l'impulsion électrique formée par la détection d'un trait dans la caméra soit négligeable, et en ce qu'on sélectionne les impulsions électriques étroites générées à la sortie de la caméra vidéo et on les soumet à une transformation de Fourier, discrète.

2. Procédé selon la revendication 1, caractérisé en ce qu'on effectue la prise de vue des traits du modèle avec des largeurs diminuant, avec la caméra et on choisit la largeur de trait minimale souhaitée pour la transformation de Fourier par exploitation de l'amplitude des impulsions électriques sélectionnées à la sortie de la caméra vidéo.

3. Procédé selon la revendication 1 ou 2, caractérisé en ce que la distance des traits sur le modèle est suffisamment grande pour que les oscillations de début et de fin des impulsions ainsi générées ne s'influencent pas réciproquement.

4. Procédé selon les revendications 1 à 3, caractérisé en ce que la fonction de transfert complexe obtenue par une transformation de Fourier discrète, notamment une transformation de Fourier rapide, est déterminée après conversion en valeur et phase à l'aide d'un calculateur de l'excursion amplitude/fréquence et/ou phase-fréquence de la caméra vidéo.

5. Procédé selon la revendication 4, caractérisé en ce que par différentiation de l'excursion phase/fréquence, on calcule le temps de trajet de groupe dans le calculateur

6. Procédé selon l'une des revendications précédentes, caractérisé en ce que le modèle comporte au moins un trait noir vertical sur un fond blanc et/ou au moins un trait vertical blanc sur un fond noir.

7. Procédé selon l'une des revendications précédentes, caractérisé en ce que le modèle comporte au moins un trait dont la largeur va en croissant dans la direction verticale en forme de coin.

8. Procédé selon l'une des revendications précédentes, caractérisé en ce que le modèle comporte au moins un trait incliné.

9. Procédé selon l'une des revendications précédentes caractérisé en ce que les impulsions générées successivement par les traits noirs et les impulsions des traits blancs permettent de former la valeur moyenne par une analyse de Fourier discrète.

10. Procédé selon l'une des revendications précédentes caractérisé en ce qu'à partir de plusieurs impulsions générées successivement avant et après la transformation discrète de Fourier, on forme la valeur moyenne.

**Fig. 1**

**Fig. 2**